# EUROPEAN PATENT APPLICATION

(11) **EP 4 513 906 A1**
(43) Date of publication of application: **26.02.2025**
(21) Application number: 23791049.2
(22) Date of filing: 07.04.2023
(51) Int. Cl.: H04W 4/06

(54) **MULTICAST CONFIGURATION INFORMATION ACQUISITION METHOD AND APPARATUS, AND TERMINAL AND NETWORK-SIDE DEVICE**

(30) Priority: 22.04.2022 CN 202210432302
(71) Applicant: Datang Mobile Communications Equipment Co., Ltd., Beijing 100085 (CN)
(72) Inventor: WANG, Lei, Beijing 100085 (CN); LIANG, Jing, Beijing 100085 (CN); ZHOU, Rui, Beijing 100085 (CN); ZENG, Erlin, Beijing 100085 (CN)
(74) Representative: dompatent von Kreisler Selting Werner - Partnerschaft von Patent- und Rechtsanwälten mbB
(86) International application number: PCT/CN2023/086941
(87) International publication number: WO 2023/202393

(57) **Abstract**

Provided in the present application are a method of obtaining multicast configuration information and apparatus, and a terminal and a network-side device. The method comprises: a terminal receiving downlink control information (DCI), wherein the DCI carries a configuration change indication of a multicast service; and the terminal acquiring configuration information of the multicast service from a scheduled MCCH according to the configuration change indication.

## Description

### CROSS-REFERENCE TO RELATED APPLICATION

This application claims priority to Chinese Patent Application No. 202210432302.0 filed in China on April 22, 2022, the disclosure of which is hereby incorporated by reference in its entirety.

### TECHNICAL FIELD

The present application relates to the field of communications technologies, and in particular, to a method of obtaining multicast configuration information and an apparatus of obtaining multicast configuration information, a terminal, and a network side device.

### BACKGROUND

The broadcast/multicast service has two service delivery modes in an air interface, that is, a delivery mode 1 and a delivery mode 2. The delivery mode 1 is a service delivery mode that supports a high quality of service (Quality of Service, QoS) requirement, and is only suitable for a terminal in a Radio Resource Control (RRC) connected state to receive a multicast service from an air interface. The delivery mode 2 is a service delivery mode that supports a low QoS requirement, and is suitable for a terminal in an RRC state to receive a broadcast service from an air interface.

For a multicast service, because the terminal only in the RRC connected sate can receive the multicast service, the terminal obtains the configuration information of the multicast service via a dedicated RRC signaling, and therefore, the current method of updating a configuration of the multicast service cannot meet the requirement that the terminal receives the multicast service in the RRC non-connected state.

### SUMMARY

An objective of the present application is to provide a method of obtaining multicast configuration information, an apparatus of obtaining multicast configuration information, a terminal, and a network side device, to resolve a problem that a current manner of updating a configuration of the multicast service cannot meet a requirement of a terminal in receiving a multicast service in a RRC non-connected state.

A method of obtaining multicast configuration information is provided. The method includes: receiving, by a terminal, downlink control information (DCI), wherein the DCI carries a configuration change indication of a multicast service; obtaining, by the terminal, configuration information of the multicast service from a scheduled multicast/broadcast service control channel MCCH according to the configuration change indication.

Optionally, that the DCI carries the configuration change indication of the multicast service includes one of following: that the DCI includes first preset bit information, wherein the first preset bit information is configured to indicate a configuration change of the multicast service; or that the DCI includes second preset bit information configured to indicate a configuration change of a broadcast service, wherein the second preset bit information is reused to indicate a configuration change of the multicast service.

Optionally, the configuration change indication of the multicast service is configured to indicate at least one or more of following: starting of the multicast service; configuration modification of the multicast service; stopping of the multicast service.

Optionally, the obtaining, by the terminal, the configuration information of the multicast service from the scheduled MCCH according to the configuration change indication includes at least one of following: when the configuration change indication of the multicast service carried in the DCI is a configuration change indication of a multicast service interested by the terminal, obtaining, by the terminal from the scheduled MCCH according to the configuration change indication, the configuration information of the multicast service interested by the terminal; or when the configuration change indication of the multicast service carried in the DCI is a configuration change indication of a multicast service being received by the terminal, obtaining, by the terminal from the scheduled MCCH according to the configuration change indication, the configuration information of the multicast service being received by the terminal.

Optionally, if the configuration change indication is a target indication value, then updating a configuration of the multicast service is indicated; otherwise, not updating a configuration of the multicast service is indicated.

Optionally, the configuration information of the multicast service includes at least one of following: a list of multicast services ongoing in a cell to which the terminal belongs; configuration information related to a protocol used by the terminal to receive the multicast service; configuration information related to cell reselection; or configuration information related to discontinuous reception of the multicast service.

A method of indicating multicast configuration information is provided. The method includes: determining, by a network side device, a configuration change indication of a multicast service; and transmitting downlink control information (DCI) to a terminal by the network side device, wherein the DCI carries the configuration change indication of the multicast service.

Optionally, that the DCI carries the configuration change indication of the multicast service includes one of following: that the DCI includes first preset bit information, wherein the first preset bit information is configured to indicate a configuration change of the multicast service; or that the DCI includes second preset bit information configured to indicate a configuration change of a broadcast service, wherein the second preset bit information is reused to indicate a configuration change of the multicast service.

Optionally, the configuration change indication of the multicast service is configured to indicate at least one or more of following: starting of the multicast service; configuration modification of the multicast service; stopping of the multicast service.

Optionally, if the configuration change indication is a target indication value, then updating a configuration of the multicast service is indicated; otherwise, not updating a configuration of the multicast service is indicated.

Optionally, the configuration information of the multicast service includes at least one of following: a list of multicast services ongoing in a cell to which the terminal belongs; configuration information related to a protocol used by the terminal to receive the multicast service; configuration information related to cell reselection; or, configuration information related to discontinuous reception of the multicast service.

A terminal is provided. The terminal includes: a memory, a transceiver, and a processor, wherein, the memory is configured to store a computer program; the processor is configured to read the computer program in the memory; and the transceiver is configured to transmit and receive data under the control of the processor and perform a following operation: receiving downlink control information DCI, wherein the DCI carries a configuration change indication of a multicast service; and the processor is configured to read the computer program in the memory and perform a following operation: obtaining configuration information of the multicast service from a scheduled multicast/broadcast service control channel MCCH according to the configuration change indication.

Optionally, that the DCI carries the configuration change indication of the multicast service includes one of following: that the DCI includes first preset bit information, wherein the first preset bit information is configured to indicate a configuration change of the multicast service; or that the DCI includes second preset bit information configured to indicate a configuration change of a broadcast service, wherein the second preset bit information is reused to indicate a configuration change of the multicast service.

Optionally, the configuration change indication of the multicast service is configured to indicate at least one or more of following: starting of the multicast service; configuration modification of the multicast service; stopping of the multicast service.

Optionally, the processor is configured to read the computer program in the memory and perform at least one of following operations: when the configuration change indication of the multicast service carried in the DCI is a configuration change indication of a multicast service interested by the terminal, obtaining, by the terminal from the scheduled MCCH according to the configuration change indication, the configuration information of the multicast service interested by the terminal; or, when the configuration change indication of the multicast service carried in the DCI is a configuration change indication of a multicast service being received by the terminal, obtaining, by the terminal from the scheduled MCCH according to the configuration change indication, the configuration information of the multicast service being received by the terminal.

Optionally, if the configuration change indication is a target indication value, then updating a configuration of the multicast service is indicated; otherwise, not updating a configuration of the multicast service is indicated.

Optionally, the configuration information of the multicast service includes at least one of following: a list of multicast services ongoing in a cell to which the terminal belongs; configuration information related to a protocol used by the terminal to receive the multicast service; configuration information related to cell reselection; or, configuration information related to discontinuous reception of the multicast service.

A network side device is provided. The network side device includes: a memory, a transceiver, and a processor, wherein the memory is configured to store a computer program; the transceiver is configured to transmit and receive data under the control of the processor; and the processor is configured to read the computer program in the memory and perform following operations: determining a configuration change indication of a multicast service; wherein the transceiver is configured to transmit downlink control information DCI to a terminal, wherein the DCI carries the configuration change indication of the multicast service.

Optionally, that the DCI carries the configuration change indication of the multicast service includes one of following: that the DCI includes first preset bit information, wherein the first preset bit information is configured to indicate a configuration change of the multicast service; or, that the DCI includes second preset bit information configured to indicate a configuration change of a broadcast service, wherein the second preset bit information is reused to indicate a configuration change of the multicast service.

Optionally, the configuration change indication of the multicast service is configured to indicate at least one or more of following: starting of the multicast service; configuration modification of the multicast service; stopping of the multicast service.

Optionally, if the configuration change indication is a target indication value, then updating a configuration of the multicast service is indicated; otherwise, not updating a configuration of the multicast service is indicated.

Optionally, the configuration information of the multicast service includes at least one of following: a list of multicast services ongoing in a cell to which the terminal belongs; configuration information related to a protocol used by the terminal to receive the multicast service; configuration information related to cell reselection; or, configuration information related to discontinuous reception of the multicast service.

An apparatus of obtaining multicast configuration information is provided. The apparatus includes: a first receiving unit, configured to receive downlink control information (DCI), wherein the DCI carries a configuration change indication of a multicast service; a first obtaining unit, configured to obtain configuration information of the multicast service from a scheduled multicast/broadcast service control channel MCCH according to the configuration change indication.

An apparatus of indicating multicast configuration information is provided. The apparatus includes: a first determining unit, configured to determine a configuration change indication of a multicast service; a first transmitting unit, configured to transmit downlink control information DCI to a terminal, wherein the DCI carries the configuration change indication of the multicast service.

A processor-readable storage medium is provided. The medium includes: a computer program stored thereon, wherein the computer program, when executed by a processor, implements the steps of the method of obtaining multicast configuration information described above, or implements the steps of the method of indicating multicast configuration information provided above.

The above technical solution of the present application has the following beneficial effects:

in the embodiments of the present application, the terminal may obtain the configuration information of the multicast service in the MCCH in the idle state or the inactive state according to the configuration change indication of the multicast service carried in the DCI.

### BRIEF DESCRIPTION OF THE DRAWINGS

FIG. 1 is a schematic flowchart of a method of obtaining multicast configuration information according to an embodiment of the present application;
FIG. 2 is a schematic flowchart of a method of indicating multicast configuration information according to an embodiment of the present application;
FIG. 3 is a schematic diagram of a structure of an apparatus of obtaining multicast configuration information according to an embodiment of the present application;
FIG. 4 is a schematic diagram of a structure of a apparatus of indicating multicast configuration information according to an embodiment of the present application;
FIG. 5 is a schematic structural diagram of a terminal according to an embodiment of the present application;
FIG. 6 is a schematic structural diagram of a network side device according to an embodiment of the present application.

### DETAILED DESCRIPTION

In order to make the technical problems, technical solutions and advantages to be solved by the present application clearer, the following describes in detail with reference to the accompanying drawings and specific embodiments. In the following description, specific details such as specific configurations and components are provided merely to facilitate a thorough understanding of embodiments of the present application. Therefore, those skilled in the art should understand that various changes and modifications can be made to the embodiments described herein without departing from the scope and spirit of the present application. In addition, descriptions of known functions and constructions are omitted for clarity and conciseness.

It should be understood that "one embodiment" or "an embodiment" mentioned throughout the specification means that a particular feature, structure, or characteristic related to the embodiment is included in at least one embodiment of the present application. Therefore, "in one embodiment" or "in an embodiment" appearing throughout the specification does not necessarily refer to the same embodiment. Furthermore, the particular features, structures, or characteristics may be combined in any suitable manner in one or more embodiments.

In various embodiments of the present application, it should be understood that the sequence numbers of the processes described below do not imply a sequence of execution, and the execution order of each process should be determined by its function and internal logic, and should not constitute any limitation on the implementation process of the embodiments of the present application.

In the embodiments of the present application, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present application, the term "a plurality of" means two or more, and other quantifiers are similar.

The technical solutions in the embodiments of the present application will be clearly and completely described below with reference to the accompanying drawings in the embodiments of the present application. All other embodiments obtained by a person of ordinary skill in the art based on the embodiments of the present application without creative efforts shall fall within the protection scope of the present application.

When performing the description of the embodiments of the present application, some concepts used in the following description are first explained.

Specifically, embodiments of the present application provide a method of obtaining multicast configuration information and an apparatus of obtaining multicast configuration information, a terminal, and a network side device, to resolve a problem that a current method of updating a configuration of the multicast service cannot meet a requirement of a terminal in receiving a multicast service in a RRC non-connected state.

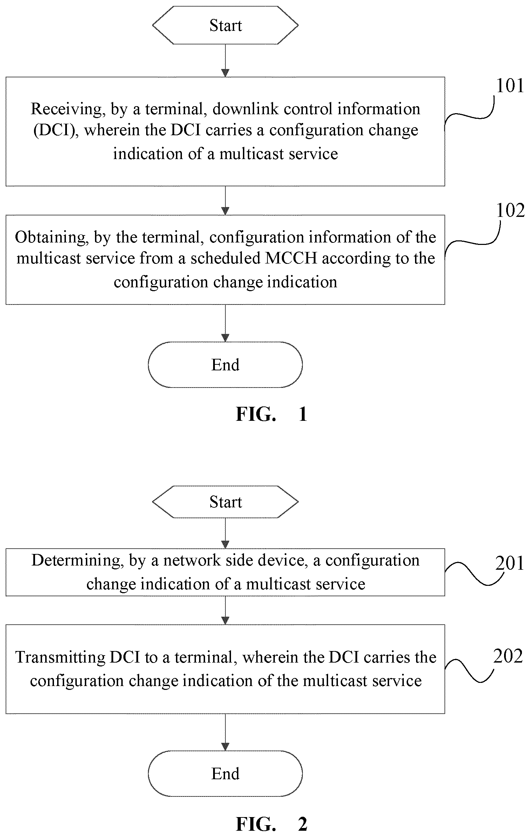

As shown in FIG. 1, an embodiment of the present application provides a method of obtaining multicast configuration information, which is applied to a terminal, and specifically includes the following steps:
Step 101: a terminal receives downlink control information (DCI), where the DCI carries a configuration change indication of a multicast service.
Step 102: the terminal obtains configuration information of a multicast service from an MCCH according to the configuration change indication.

In this embodiment, the terminal receives the DCI, and obtains the configuration related to the multicast service in the MCCH according to the configuration change indication of the multicast service carried in the DCI. The configuration change indication is used to indicate a situation of updating the multicast service configuration in the MCCH, for example, the configuration change indication may indicate updating the multicast service configuration in the MCCH, or indicate that the multicast service configuration in the MCCH is not updated. In a scenario in which the multicast service configuration is updated, for example, a new multicast service starts, configuration information of a configured multicast service is modified, and a stopping of the currently ongoing multicast service, and a configuration of a currently ongoing multicast service is modified.

The multicast service requirement may be a multicast service monitoring requirement of the terminal, for example, the terminal has a new multicast service of interest, and when the terminal is receiving the multicast service, the terminal has a multicast service requirement. The terminal determines, according to the indication of the DCI and/or the multicast service requirement, whether to obtain the configuration information of the multicast service, and when the configuration information of the multicast service needs to be obtained, the terminal may obtain the configuration information of the multicast service by reading the content of MCCH.

In the embodiments of the present application, the terminal may receive the DCI in the RRC non-connected state, and may obtain the configuration information of the multicast service in the MCCH in the idle state or the inactive state according to the configuration change indication of the multicast service carried in the DCI.

In an optional embodiment, that the DCI carries a configuration change indication of a multicast service includes one of following:
(1) the DCI includes first preset bit information, and the first preset bit information is configured to indicate a configuration change of the multicast service;
   optionally, the first preset bit information is newly added bit information in the DCI, and the first preset bit information is configured to indicate a configuration update situation of the multicast service; the first preset bit information may include 2 bits or 1 bit, and whether the multicast service configuration is changed may be indicated by using different bit information values;
(2) the DCI includes second preset bit information configured to indicate a configuration change of the broadcast service, and the second preset bit information is reused to indicate a configuration change of the multicast service;
   in this embodiment, the second preset bit information in the DCI is bit information used to indicate the configuration change of the broadcast service, and the configuration change of the multicast service is indicated by reusing the bit information indicating the configuration change of the broadcast service; the second preset bit information may include 2 bits or 1 bit; whether the multicast service configuration is updated is indicated through different bit information values.

If the terminal determines that the configuration information of the broadcast/multicast service is changed according to the second preset bit information in the DCI, the terminal may read the content of the MCCH, determine a specific broadcast service and/or multicast service that has changed, and if it is detected that the configuration information of a certain multicast service is changed, data reception for the multicast service may be performed according to the changed configuration information of the multicast service.

Optionally, if the configuration change indication is the target indication value, the updating a configuration of the multicast service is indicated; otherwise, not updating a configuration of the multicast service is indicated.

In this embodiment, the DCI implements the indication of updating the multicast service configuration by using the carried configuration change indication of the multicast service. The target indication value may be set according to requirements, for example, set to "1", set as special indication information, and the like. When the configuration change indication is set to the target indication value, it indicates that the configuration information of the multicast service is updated; and when the configuration change indication is set to another value, it indicates that the configuration information of the multicast service is not updated.

It should be noted that the configuration change indication is a target indication value, and may include: if the configuration change indication includes a plurality of pieces of indication information, at least one piece of indication information in the plurality of pieces of indication information is set as a target indication value, which indicates that the multicast service configuration is updated; and if all the indication information in the plurality of pieces of indication information are not the target indication value, which indicates that the multicast service configuration is not updated.

In an example that the bit information in the DCI indicates the configuration change of the multicast service, if the first preset bit information and/or the second preset bit information include at least one bit information as the target indication value, updating a multicast service configuration is indicated; otherwise, not updating the multicast service configuration is indicated.

In this embodiment, both the first preset bit information and the second preset bit information may include multiple bits, taking the first preset bit information as an example, if the first preset bit information includes multiple bits and at least 1 bit is a target indication value, it indicates that the multicast service configuration is updated, and if all bits included in the first preset bit information are not the target indication values, it indicates that the multicast service configuration is not updated. Taking the second preset bit information as an example, if the second preset bit information includes multiple bits and at least 1 bit is a target indication value, it indicates that the multicast service configuration is updated, and if none of the bits included in the second preset bit information is the target indication value, it indicates that the multicast service configuration is not updated.

In an example that the first preset bit information in the DCI indicates the configuration change of the multicast service, if the first preset bit information includes 2 bits, the target indication value is "1", and when 2 bits are indicated as "01", "10", and "11", it indicates that the multicast service configuration is updated; and when the 2 bits are "00", it indicates that the multicast service configuration is not updated.

Optionally, the configuration change indication of the multicast service is configured to indicate at least one or more of following:
starting of the multicast service;
configuration modification of the multicast service;
stopping of the multicast service.

In this embodiment, the configuration change indication may indicate the at least one of the above multicast service configuration changes. For example, if the configuration change indication indicates that the starting of the multicast service, it indicates that a new multicast service starts, and at this time, it may indicate that the multicast service configuration is updated; if the configuration change indication indicates the configuration modification of the multicast service, it indicates that the configuration of the currently ongoing multicast service is modified, it indicates that the multicast service configuration is updated; and if the configuration change indication indicates that the stopping of the currently ongoing multicast service, it may indicate that the multicast service configuration is updated.

In an example that the configuration change indication indicates the starting of the multicast service, the network side device indicates the starting of the multicast service by using DCI, and then the terminal may obtain the configuration information of the multicast service in the MCCH by reading the MCCH, so as to determine the related configuration information of the started multicast service; alternatively, before the multicast service starts, the network-side device configures the configuration information of the multicast service 1 for the terminal, and when the terminal does not start to perform data reception of the multicast service 1, the network-side device modifies the configuration information of the multicast service 1, and then the network-side device indicates, by means of the DCI, that when the multicast service 1 starts, the network-side device may send, in the MCCH, the modified configuration information of the multicast service 1, and the terminal determines, according to the DCI, that the multicast service starts, the updated configuration information of the multicast service 1 is obtained by reading the MCCH.

In an example that the configuration change indication indicates the stopping of the multicast service, if the network side device stops the multicast service 2, the configuration information of the multicast service 2 may be deleted or modified in the configuration information of the multicast service transmitted in the MCCH. The network side device indicates that the stopping of the multicast service by using the DCI, and the terminal determines the one or more multicast services, configuration information of which are deleted or modified, by reading the MCCH, so that it can be determined that the multicast service 2 stops, thereby stopping receiving the data in the multicast service 2.

For the configuration modification of the multicast service, if the network side device modifies the configuration information of the currently ongoing multicast service 3, the network side device may indicate the configuration modification of the multicast service by using the DCI, and the terminal determines, according to the DCI, that the multicast service is modified, and determines, by reading the MCCH, the one or more multicast services, configuration information of which is modified, so that the configuration information of the multicast service 3 may be determined to be changed, and then the data reception of the multicast service 3 is performed according to the changed configuration information.

Optionally, the DCI may indicate, by using bit information, a configuration change of the one or more multicast services. The configuration change of one or more of the one or more multicast services may be indicated by 1 bit in the DCI. The following describes a manner in which the DCI indicates a configuration change of the multicast service by using specific embodiments.

In an example in which the DCI includes the first preset bit information:
manner 1: the first preset bit information includes 2 bits, 1 bit of which is used to indicate the starting of the multicast service, and the other 1 bit is used to indicate that the configuration modification of the multicast service/the stopping of the multicast service;
optionally, the high bit in the first preset bit information indicates the starting of the multicast service, and the low bit indicates that the configuration modification of the multicast service/stopping of the multicast service; optionally, the high bit in the first preset bit information indicates that the configuration modification of the multicast service/stopping of the multicast service, and the low bit indicates the starting of the multicast service;
manner 2: the first preset bit information includes 1 bit, and the 1 bit is used to indicate that the configuration modification of the multicast service/stopping of the multicast service.

In an example in which the DCI is used to include second preset bit information for indicating a configuration change of the broadcast service, and the second preset bit information is reused to indicate a configuration change of the multicast service:
manner 3: the second preset bit information includes 2 bits used to indicate a configuration change of the broadcast service; 1 bit of the 2 bits is reused to indicate the starting of the multicast service, and the other 1 bit is reused to indicate the configuration modification of the multicast service/stopping of the multicast service;
optionally, the high bit in the second preset bit information indicates the starting of the multicast service, and the low bit indicates that the configuration modification of the multicast service/stopping of the multicast service;
manner 4: the second preset bit information includes 1 bit used to indicate that the configuration of the broadcast service is updated, and the 1 bit is reused to indicate that the configuration modification of the multicast service/stopping of the multicast service;
optionally, obtaining, by the terminal, the configuration information of the multicast service from the scheduled MCCH according to the configuration change indication includes at least one of following:
   when the configuration change indication of the multicast service carried in the DCI is the configuration change indication of the multicast service interested by the terminal, obtaining, by the terminal, the configuration information of the multicast service interested by the terminal from the scheduled MCCH according to the configuration change indication;
   when the configuration change indication of the multicast service carried in the DCI is the configuration change indication of the multicast service currently received by the terminal, obtaining, by the terminal from the scheduled MCCH according to the configuration change indication, the configuration information of the multicast service currently received by the terminal.

In this embodiment, when the terminal has a multicast service requirement and the configuration change indication of the multicast service indicates that the configuration information of the multicast service is changed, the terminal reads the MCCH to obtain the configuration information of the multicast service. For example, the terminal has a multicast service requirement, for example, the terminal has a multicast service being currently received, the terminal has a multicast service of interest, etc. and the multicast service of interest may be a multicast service to be monitored by the terminal. In this embodiment, when the terminal has the multicast service requirement and the DCI indicates the configuration updating of the multicast service, the terminal reads the content of the MCCH to obtain the configuration information of the multicast service therein.

For example, the terminal determines updating of the configuration information of the multicast service according to the DCI (which may include configuring the configuration information for the new multicast service, modifying the configuration information of the ongoing multicast service, etc.), and the terminal has the multicast service (denoted as multicast service 1) of interest at this time, and the terminal reads the MCCH to obtain the configuration information corresponding to the multicast service 1.

Optionally, the method further includes: if the terminal does not have a multicast service requirement (for example, a multicast service of no interest in receiving and the terminal is not receiving a multicast service), and/or the DCI indicates that the multicast service configuration is not updated, not reading the MCCH.

In this embodiment, when the terminal has no multicast service requirement (for example, the terminal only monitors the broadcast service or the terminal has only the broadcast service of interest), and/or the DCI indicates that the multicast service configuration is not updated, the terminal does not need to read the MCCH, that is, there is no need to obtain the updated configuration information of the multicast service.

Optionally, the configuration information of the multicast service includes at least one of following:
1) a list of ongoing multicast services in a cell to which the terminal belongs;
2) configuration information related to a protocol used by the terminal to receive the multicast service; the configuration information related to the protocol includes configuration information of a physical layer, a Medium Control Channel (MAC), a Packet Data Convergence Protocol (PDCP), and the like corresponding to receiving the multicast service by the terminal;
3) configuration information related to cell reselection; and the configuration information related to cell reselection is, for example, configuration information related to cell reselection for ensuring multicast service continuity when the terminal moves;
4) configuration information related to discontinuous reception of the multicast service; and configuration information related to discontinuous reception of the multicast service is, for example, configuration information related to supporting discontinuous reception of the multicast service by the terminal.

The following describes an implementation process of the method of obtaining multicast configuration information in the embodiments of the present application through specific embodiments.

Example 1: a network side device broadcasts, in an MCCH, a list of broadcast and multicast services and related configuration information of broadcast and multicast service that are being performed by a current cell.

The network side device transmits a "00" indication to the terminal by using 2 bits of the first preset bit information in the DCI, where 1 bit in the 2 bit indicates the starting of the multicast service, and the other 1 bit indicates that the configuration modification of the multicast service/stopping of the multicast service.

If the first preset bit information in the DCI received by the terminal is "00", it indicates that the multicast service configuration is not updated, and the terminal does not need to read the content of the MCCH to update the multicast configuration.

Example 2: the network side device broadcasts, in the MCCH, a list of broadcast and multicast services and related configuration information of the broadcast and multicast services that are being performed by the current cell.

The network side device transmits a "01" indication or a "10" indication to the terminal in the DCI by using 2 bits of the first preset bit information, where the high bit in the 2 bit indicates the starting of the multicast service, and the low bit indicates that the configuration modification of the multicast service/stopping of the multicast service.

If the first preset bit information in the DCI received by the terminal is "10", it indicates that there is a new multicast service to be started. If the terminal only monitors the broadcast service or has only the broadcast service of interest, the terminal does not need to read the content of the MCCH to update multicast service configuration; and if the terminal has the new multicast service that is of interest, the terminal reads the content of the MCCH to obtain the updated configuration information of the multicast service.

If the first preset bit information in the DCI received by the terminal is "01", it indicates the configuration modification of the multicast service. If the terminal only monitors the broadcast service or has only the broadcast service of interest, the terminal does not need to read the content of MCCH to update the multicast service configuration; and if the terminal is receiving the multicast service, the terminal reads the content of MCCH to obtain the updated configuration information of the multicast service.

Example 3: the network side device broadcasts, in the MCCH, a list of broadcast and multicast services and related configuration information of broadcast and multicast services that are being performed by the current cell.

The network side device transmits a "01" indication or a "10" indication to the terminal in the DCI by using 2 bits of the first preset bit information, where the high bit in the 2 bit indicates that the configuration modification of the multicast service/stopping of the multicast service, and the low bit indicates the starting of the multicast service.

If the first preset bit information in the DCI received by the terminal is s "10", it indicates the configuration modification of the multicast service. If the terminal only monitors the broadcast service or has only the broadcast service of interest, the terminal does not need to read the content of MCCH to update the multicast service configuration. If the terminal is receiving the multicast service, the terminal reads the content of MCCH to obtain the updated configuration information of the multicast service.

If the first preset bit information in the DCI received by the terminal is "01", it indicates that there is a new multicast service to be started. If the terminal only monitors the broadcast service or has only the broadcast service of interest, the terminal does not need to read the content of MCCH to update the multicast service configuration. If the terminal has a new multicast service of interest in receiving, the terminal reads the content of MCCH to obtain the updated configuration information of the multicast service.

Example 4: the network side device broadcasts, in the MCCH, a list of broadcast and multicast services and related configuration information of broadcast and multicast services that are being performed by the current cell.

The network side device transmits an "11" indication to the terminal by using 2 bits of the first preset bit information in the DCI, where 1 bit in the 2 bit indicates the starting of the multicast service, and the other 1 bit indicates that the configuration modification of the multicast service/stopping of the multicast service.

The first preset bit information in the DCI received by the terminal is " 11", indicating the starting of the new multicast service, and the configuration modification of the currently ongoing multicast service. If the terminal is receiving the multicast service or has the new multicast service which the terminal is interested in receiving, the terminal reads the content of MCCH and obtains the updated configuration information of the multicast service.

Example 5: the network side device broadcasts, in the MCCH, a list of broadcast and multicast services and related configuration information of broadcast and multicast services that are being performed by the current cell.

The network side device transmits "0" or "1" indication to the terminal by using 1 bit of the first preset bit information in the DCI, where the 1 bit indicates that the configuration modification of the multicast service/stopping of the multicast service.

The first preset bit information in the DCI received by the terminal is "1", indicating the configuration modification of the currently ongoing multicast service. If the terminal is receiving the multicast service, the terminal reads the content of MCCH and obtains the updated configuration information of the multicast service.

The first preset bit information in the DCI received by the terminal is "0", indicating that the configuration of the currently ongoing multicast service is not modified, and the terminal does not need to read the content of MCCH.

Example 6: the network side device broadcasts, in the MCCH, a list of broadcast and multicast services and related configuration information of broadcast and multicast services that are being performed by the current cell.

The network side device transmits a "00" indication to the terminal by using 2 bits of the second preset bit information in the DCI, where 1 bit in the 2 bit indicates the starting of the multicast service, and the other 1 bit indicates that the configuration modification of the multicast service/stopping of the multicast service.

If the second preset bit information in the DCI received by the terminal is "00", it indicates that the configuration of the multicast service is not updated, the configuration of the broadcast service is not updated, and the terminal does not need to read the content of MCCH to update the configuration of the multicast service or the broadcast service.

Example 7: the network side device broadcasts, in the MCCH, a list of broadcast and multicast services and related configuration information of broadcast and multicast services that are being performed by the current cell.

The network side device transmits a "01" indication or a "10" indication to the terminal in the DCI by using 2 bits of the second preset bit information, where the high bit in the 2 bit indicates the starting of the multicast service/the broadcast service, and the low bit indicates the configuration modification of the multicast service/broadcast service, or the stopping of the multicast service/broadcast service.

If the second preset bit information in the DCI received by the terminal is "10", which indicates the starting of a new multicast service/broadcast service. If the terminal has a new multicast service/broadcast service that the terminal is interested in receiving, the terminal reads the content of MCCH to obtain the updated configuration information of the multicast service/broadcast service.

If the second preset bit information in the DCI received by the terminal is "01", it indicates the configuration modification of the currently ongoing multicast service/broadcast service. If the terminal is receiving the multicast service/broadcast service, the terminal reads the content of MCCH to obtain the updated configuration information of the multicast service/broadcast service.

Example 8: the network side device broadcasts, in the MCCH, a list of broadcast and multicast services and related configuration information of broadcast and multicast services that are being performed by the current cell.

The network side device transmits a "11" indication to the terminal in the DCI by using 2 bits of the second preset bit information, where 1 bit in the 2 bits indicates the configuration modification of the multicast service/broadcast service, or the stopping of the multicast service/broadcast service, and the other bit indicates the starting of the multicast service/the broadcast service.

If the second preset bit information in the DCI received by the terminal is "11", which indicates the starting of a new multicast service/broadcast service and the configuration modification of the current ongoing multicast service/broadcast service. If the terminal has a new multicast service/broadcast service that the terminal is interested in receiving, or the terminal has the multicast service/broadcast service currently being received, the terminal reads the content of MCCH to obtain the updated configuration information of the multicast service/broadcast service.

Example 9: the network side device broadcasts, in the MCCH, a list of broadcast and multicast services and related configuration information of broadcast and multicast services that are being performed by the current cell.

The network side device transmits a "11" indication to the terminal in the DCI by using 2 bits of the second preset bit information, where 1 bit in the 2 bits indicates the configuration modification of the multicast service/broadcast service, or the stopping of the multicast service/broadcast service, and the other bit indicates the starting of the multicast service/the broadcast service.

If the second preset bit information in the DCI received by the terminal is "11", which indicates the starting of a new multicast service/broadcast service and the configuration modification of the current ongoing multicast service/broadcast service. If the terminal has a new multicast service/broadcast service that the terminal is interested in receiving, or the terminal has the multicast service/broadcast service currently being received, the terminal reads the content of MCCH to obtain the updated configuration information of the multicast service/broadcast service.

Example 10: the network side device broadcasts, in the MCCH, a list of broadcast and multicast services and related configuration information of broadcast and multicast services that are being performed by the current cell.

The network side device transmits an indication of "0" or "1" to the terminal in the DCI by using 1 bit of the second preset bit information, where the 1 bit indicates the configuration modification of the multicast service, or the stopping of the multicast service.

If the second preset bit information in the DCI received by the terminal is "1 ", which indicates the configuration modification of the current ongoing multicast service. If the terminal has a multicast service currently being received, the terminal reads the content of MCCH to obtain the updated configuration information of the multicast service.

If the second preset bit information in the DCI received by the terminal is "0", which indicates the configuration of the current ongoing multicast service is not modified. The terminal does not need to read the content of MCCH.

In the embodiments of the present application, the terminal receives the DCI, and can obtain the configuration information of the multicast service in the MCCH in the idle state or the inactive state according to the configuration change indication, carried in the DCI, of the multicast service.

As shown in FIG. 2, an embodiment of the present application provides a method of indicating multicast configuration information, applied to a network side device, and the method specifically includes the following steps:
Step 201: a network side device determines a configuration change indication of a multicast service;
Step 202: the network side device transmits DCI to the terminal, where the DCI carries the configuration change indication of the multicast service.

In this embodiment, when changing the configuration information of the multicast service, the network side device determines a configuration change indication of the multicast service, where the configuration change indication is used to indicate the configuration change situation of the multicast service. The DCI transmitted by the network side device to the terminal carries an indication about the updating a configuration of the multicast service, that is, the configuration change indication, where the configuration change indication is used to indicate whether the configuration information of the multicast service included in the MCCH changes. In a scenario in which the multicast service configuration is updated, for example, a new multicast service starts, the stopping of the currently ongoing multicast service, and modification of the configuration of the currently ongoing multicast service.

The network side device indicates the configuration change of the multicast service to the terminal through the DCI, and after receiving the DCI, the terminal obtains the configuration information of the multicast service in the MCCH according to the configuration change indication, carried in the DCI, of the multicast service.

In the embodiments of the present application, the network side device indicates the multicast service configuration change to the terminal through the DCI, so that the terminal can obtain the configuration information of the multicast service in the MCCH in an idle state or an inactive state according to the configuration change indication, of the multicast service, carried in the DCI.

Optionally, that the DCI carries the configuration change indication of the multicast service includes one of following:
(1) the DCI includes first preset bit information, and the first preset bit information is configured to indicate a configuration change of the multicast service;
   optionally, the first preset bit information is newly added bit information in the DCI, and the first preset bit information is configured to indicate a configuration update situation of the multicast service; the first preset bit information may include 2 bits or 1 bit, and whether the multicast service configuration is updated may be indicated by using different bit information values;
(2) the DCI includes second preset bit information configured to indicate a configuration change of the broadcast service, and the second preset bit information is reused to indicate a configuration change of the multicast service;
   optionally, the second preset bit information in the DCI is bit information used to indicate the configuration change of the broadcast service, and in this embodiment, the configuration updating situation of the multicast service is indicated by reusing the bit information indicating the configuration updating situation of the broadcast service; the second preset bit information may include 2 bits or 1 bit; whether the multicast service configuration is updated is indicated through different bit information values.

Optionally, if the configuration change indication is the target indication value, the updating a configuration of the multicast service is indicated; otherwise, not updating a configuration of the multicast service is indicated.

In this embodiment, the DCI implements the indication of updating the multicast service configuration by using the carried configuration change indication of the multicast service. The target indication value may be set according to requirements, for example, set to "1", set as special indication information, and the like. When the configuration change indication is set to the target indication value, it indicates that the configuration information of the multicast service is updated; and when the configuration change indication is set to another value, it indicates that the configuration information of the multicast service is not updated.

It should be noted that the configuration change indication is a target indication value, and may include: if the configuration change indication includes a plurality of pieces of indication information, at least one piece of indication information in the plurality of pieces of indication information is set as a target indication value, which indicates that the multicast service configuration is updated; and if all the indication information in the plurality of pieces of indication information are not the target indication value, which indicates that the multicast service configuration is not updated.

In an example that the bit information in the DCI indicates the configuration change of the multicast service, if the first preset bit information and/or the second preset bit information include at least one bit information as the target indication value, updating a multicast service configuration is indicated; otherwise, not updating the multicast service configuration is indicated.

In this embodiment, both the first preset bit information and the second preset bit information may include multiple bits, taking the first preset bit information as an example, if the first preset bit information includes multiple bits and at least 1 bit is a target indication value, it indicates that the multicast service configuration is updated, and if all bits included in the first preset bit information are not the target indication values, it indicates that the multicast service configuration is not updated. Taking the second preset bit information as an example, if the second preset bit information includes multiple bits and at least 1 bit is a target indication value, it indicates that the multicast service configuration is updated, and if none of the bits included in the second preset bit information is the target indication value, it indicates that the multicast service configuration is not updated.

In an example that the first preset bit information in the DCI indicates the configuration change of the multicast service, if the first preset bit information includes 2 bits, the target indication value is "1", and when 2 bits are indicated as "01", "10", and "11", it indicates that the multicast service configuration is updated; and when the 2 bits are "00", it indicates that the multicast service configuration is not updated.

Optionally, the configuration change indication of the multicast service is configured to indicate at least one or more of following:
starting of the multicast service;
configuration modification of the multicast service;
stopping of the multicast service.

In this embodiment, the configuration change indication may indicate the at least one of the above multicast service configuration changes. For example, if the configuration change indication indicates that the starting of the multicast service, it indicates that a new multicast service starts, and at this time, it may indicate that the multicast service configuration is updated; if the configuration change indication indicates the configuration modification of the multicast service, it indicates that the configuration of the currently ongoing multicast service is modified, it indicates that the multicast service configuration is updated; and if the configuration change indication indicates that the stopping of the currently ongoing multicast service, it may indicate that the multicast service configuration is updated.

Optionally, the DCI may indicate, by using bit information, a configuration updating situation of the one or more multicast services. The configuration updating situation of one or more of the one or more multicast services may be indicated by 1 bit in the DCI. The following describes a manner in which the DCI indicates a configuration updating situation of the multicast service by using specific embodiments.

In an example in which the DCI includes the first preset bit information:
manner 1: the first preset bit information includes 2 bits, 1 bit of which is used to indicate the starting of the multicast service, and the other 1 bit is used to indicate that the configuration modification of the multicast service/the stopping of the multicast service;
optionally, the high bit in the first preset bit information indicates the starting of the multicast service, and the low bit indicates that the configuration modification of the multicast service/stopping of the multicast service; optionally, the high bit in the first preset bit information indicates that the configuration modification of the multicast service/stopping of the multicast service, and the low bit indicates the starting of the multicast service;
manner 2: the first preset bit information includes 1 bit, and the 1 bit is used to indicate that the configuration modification of the multicast service/stopping of the multicast service.

In an example in which the DCI is used to include second preset bit information for indicating a configuration change of the broadcast service, and the second preset bit information is reused to indicate a configuration change of the multicast service:
manner 3: the second preset bit information includes 2 bits used to indicate a configuration change of the broadcast service; 1 bit of the 2 bits is reused to indicate the starting of the multicast service, and the other 1 bit is reused to indicate the configuration modification of the multicast service/stopping of the multicast service;
optionally, the high bit in the second preset bit information indicates the starting of the multicast service, and the low bit indicates that the configuration modification of the multicast service/stopping of the multicast service;
manner 4: the second preset bit information includes 1 bit used to indicate that the configuration updating situation of the broadcast service, and the 1 bit is reused to indicate that the configuration modification of the multicast service/stopping of the multicast service.

Optionally, the configuration information of the multicast service includes at least one of following:
1) a list of ongoing multicast services in a cell to which the terminal belongs;
2) configuration information related to a protocol used by the terminal to receive the multicast service; the configuration information related to the protocol includes configuration information of a physical layer, a Medium Control Channel (MAC), a Packet Data Convergence Protocol (PDCP), and the like corresponding to receiving the multicast service by the terminal;
3) configuration information related to cell reselection; and the configuration information related to cell reselection is, for example, configuration information related to cell reselection for ensuring multicast service continuity when the terminal moves;
4) configuration information related to discontinuous reception of the multicast service; and configuration information related to discontinuous reception of the multicast service is, for example, configuration information related to supporting discontinuous reception of the multicast service by the terminal.

After receiving the DCI, the terminal obtains the configuration information of the multicast service in the MCCH according to the indication of the DCI and/or the multicast service requirement of the terminal, for example, if the terminal has the multicast service requirement and the DCI indicates updating a configuration of the multicast service, the terminal reads the configuration information of the multicast service in the MCCH. If the terminal has no multicast service requirement, and/or the DCI indicates not updating the configuration of the multicast service, the terminal does not read the MCCH.

A specific implementation process of obtaining the multicast configuration information by the terminal may be obtained by referring to the method embodiment applied to the terminal, and details are not described herein again.

In the embodiments of the present application, the network side device indicates the multicast service configuration change to the terminal through the DCI, so that the terminal can obtain the configuration information of the multicast service in the MCCH in the idle state or the inactive state according to the configuration change indication, of the multicast service, carried by the DCI.

The above embodiments describe the methods of obtaining and indicating multicast configuration information of the present application, and the apparatuses corresponding to the methods will be further described hereinafter with reference to the accompanying drawings.

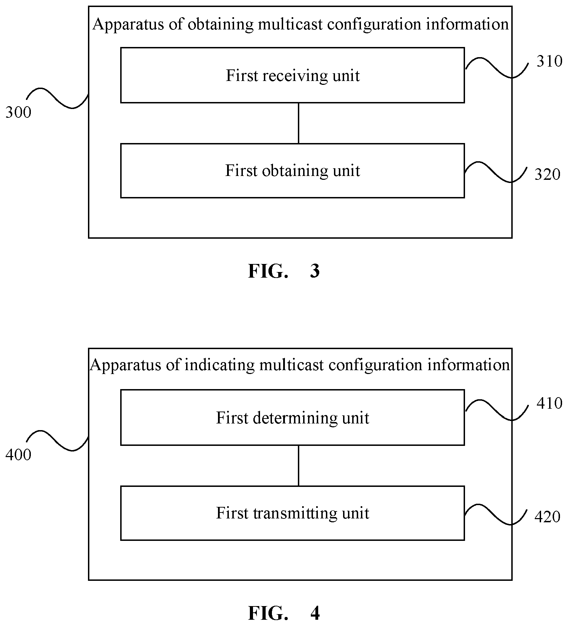

Specifically, as shown in FIG. 3, an embodiment of the present application provides an apparatus 300 of obtaining multicast configuration information, the apparatus 300 being applied to a terminal and including:
a first receiving unit 310, configured to receive downlink control information (DCI), where the DCI carries a configuration change indication of a multicast service;
a first obtaining unit 320, configured to obtain configuration information of a multicast service from a scheduled Multicast Control Channel (MCCH) according to the configuration change indication.

Optionally, that the DCI carries a configuration change indication of a multicast service includes one of following:
(1) the DCI includes first preset bit information, and the first preset bit information is configured to indicate a configuration change of the multicast service;
(2) the DCI includes second preset bit information configured to indicate a configuration change of the broadcast service, and the second preset bit information is reused to indicate a configuration change of the multicast service;

Optionally, if the configuration change indication is the target indication value, the updating a configuration of the multicast service is indicated; otherwise, not updating a configuration of the multicast service is indicated.

Optionally, the configuration change indication of the multicast service is configured to indicate at least one or more of following:
starting of the multicast service;
configuration modification of the multicast service;
stopping of the multicast service.

Optionally, the first obtaining unit is specifically configured to perform at least one of following operations:
when the configuration change indication of the multicast service carried in the DCI is the configuration change indication of the multicast service interested by the terminal, obtaining, by the terminal, the configuration information of the multicast service interested by the terminal from the scheduled MCCH according to the configuration change indication;
when the configuration change indication of the multicast service carried in the DCI is the configuration change indication of the multicast service currently received by the terminal, obtaining, by the terminal from the scheduled MCCH according to the configuration change indication, the configuration information of the multicast service currently received by the terminal.

Optionally, the configuration information of the multicast service includes at least one of following:
1) a list of ongoing multicast services in a cell to which the terminal belongs;
2) configuration information related to a protocol used by the terminal to receive the multicast service;
3) configuration information related to cell reselection;
4) configuration information related to discontinuous reception of the multicast service.

It should be noted that the above-mentioned apparatus provided in the embodiments of the present application can implement all method steps implemented by the above method embodiments applied to the terminal, and can achieve the same technical effect, which will not be specifically described in this embodiment in detail in respect of the same parts and beneficial effects of the method embodiments.

Specifically, as shown in FIG. 4, an embodiment of the present application provides an apparatus of indicating multicast configuration information 400, applied to a network side device and including:
a first determining unit 410, configured to determine a configuration change indication of a multicast service; and
a first transmitting unit 420, configured to transmit DCI to a terminal, where the DCI carries the configuration change indication of the multicast service.

Optionally, that the DCI carries the configuration change indication of the multicast service includes one of following:
(1) the DCI includes first preset bit information, and the first preset bit information is configured to indicate a configuration change of the multicast service;
(2) the DCI includes second preset bit information configured to indicate a configuration change of the broadcast service, and the second preset bit information is reused to indicate a configuration change of the multicast service.

Optionally, if the configuration change indication is the target indication value, the updating a configuration of the multicast service is indicated; otherwise, not updating a configuration of the multicast service is indicated.

Optionally, the configuration change indication of the multicast service is configured to indicate at least one or more of following:
starting of the multicast service;
configuration modification of the multicast service;
stopping of the multicast service.

Optionally, the configuration information of the multicast service includes at least one of following:
1) a list of ongoing multicast services in a cell to which the terminal belongs;
2) configuration information related to a protocol used by the terminal to receive the multicast service;
3) configuration information related to cell reselection;
4) configuration information related to discontinuous reception of the multicast service.

It should be noted that, the foregoing apparatus provided in the embodiments of the present application can implement all method steps implemented by the foregoing method embodiments applied to a network side device, and can achieve the same technical effect, and details of the same parts and beneficial effects as those in the method embodiments in this embodiment are not described herein again.

It should be noted that the division of the units in the embodiments of the present application is schematic, and is merely a logical function division, and there may be another division manner in actual implementation. In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present application essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present application. The foregoing storage medium includes any medium that can store program code, such as a USB flash drive, a removable hard disk, a read-only memory (ROM), a random access memory (RAM), a magnetic disk, or an optical disk.

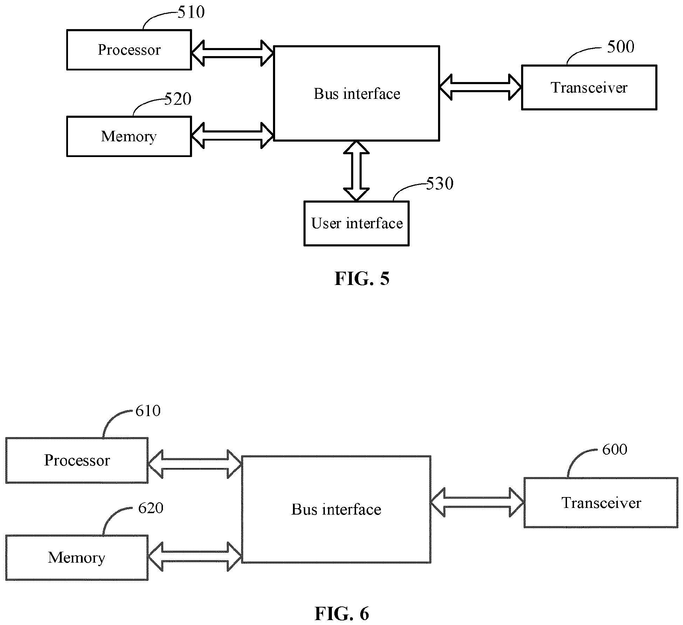

As shown in FIG. 5, an embodiment of the present application further provides a terminal, including: a memory 520, a transceiver 500, and a processor 510, wherein the memory 520 is configured to store a computer program; the processor 510 is configured to read a computer program in the memory; and the transceiver 500 is configured to transmit and receive data under the control of the processor 510 and perform following operations: receiving DCI, where the DCI carries a configuration change indication of a multicast service.

The processor 510 is configured to read a computer program in the memory and perform following operations:
obtaining configuration information of the multicast service from the MCCH according to the configuration change indication.

Optionally, that the DCI carries a configuration change indication of a multicast service includes one of following:
(1) the DCI includes first preset bit information, and the first preset bit information is configured to indicate a configuration change of the multicast service;
(2) the DCI includes second preset bit information configured to indicate a configuration change of the broadcast service, and the second preset bit information is reused to indicate a configuration change of the multicast service;

Optionally, if the configuration change indication is the target indication value, the updating a configuration of the multicast service is indicated; otherwise, not updating a configuration of the multicast service is indicated.

Optionally, the configuration change indication of the multicast service is configured to indicate at least one or more of following:
starting of the multicast service;
configuration modification of the multicast service;
stopping of the multicast service.

Optionally, the processor is configured to read a computer program in the memory and perform at least one of following operations:
when the configuration change indication of the multicast service carried in the DCI is the configuration change indication of the multicast service interested by the terminal, obtaining, by the terminal, the configuration information of the multicast service interested by the terminal from the scheduled MCCH according to the configuration change indication;
when the configuration change indication of the multicast service carried in the DCI is the configuration change indication of the multicast service currently received by the terminal, obtaining, by the terminal from the scheduled MCCH according to the configuration change indication, the configuration information of the multicast service currently received by the terminal.

Optionally, the configuration information of the multicast service includes at least one of following:
1) a list of ongoing multicast services in a cell to which the terminal belongs;
2) configuration information related to a protocol used by the terminal to receive the multicast service;
3) configuration information related to cell reselection;
4) configuration information related to discontinuous reception of the multicast service.

It should be noted that, in FIG. 5, the bus architecture may include any number of interconnected buses and bridges, and specifically, various circuits of one or more processors represented by the processor 510 and a memory represented by the memory 520 are linked together. The bus architecture may also link various other circuits, such as a peripheral device, a voltage regulator, and a power management circuit, which are well known in the art, and therefore are not further described herein. The bus interface provides an interface. The transceiver 500 May be a plurality of elements, that is, includes a transmitter and a transceiver, and provides a unit for communicating with various other apparatuses on a transmission medium. For different user equipment, the user interface 530 May also be an interface capable of being externally connected to a required device, and the connected device includes but is not limited to a keypad, a display, a speaker, a microphone, a joystick, and the like. The processor 510 is responsible for managing the bus architecture and general processing, and the memory 520 May store data used by the processor 510 when performing operations.

Optionally, the processor 510 May be a Central Processing Unit (CPU), an Application Specific Integrated Circuit (ASIC), a Field-Programmable Gate Array (FPGA), or a Complex Programmable Logic Device (CPLD), and the processor may also use a multi-core architecture.

The processor invokes the computer program stored in the memory, and is configured to perform any one of the methods provided in the embodiments of the present application according to the obtained executable instruction. The processor and the memory may also be physically separated.

It should be noted that the above-mentioned terminal provided in the embodiments of the present application can implement all method steps implemented by the above method embodiments applied to the terminal, and can achieve the same technical effect, which will not be specifically described in detail in this embodiment and some of the beneficial effects that are the same as those in the method embodiment.

As shown in FIG. 6, an embodiment of the present application further provides a network side device, including: a memory 620, a transceiver 600, and a processor 610, wherein the memory 620 is configured to store a computer program; the transceiver 600 is configured to transmit and receive data under the control of the processor 610; and the processor 610 is configured to read the computer program in the memory and perform following operations:
determining a configuration change indication of a multicast service; and
transmitting DCI to a terminal, where the DCI carries the configuration change indication of the multicast service.

Optionally, that the DCI carries the configuration change indication of the multicast service includes one of following:
(1) the DCI includes first preset bit information, and the first preset bit information is configured to indicate a configuration change of the multicast service;
(2) the DCI includes second preset bit information configured to indicate a configuration change of the broadcast service, and the second preset bit information is reused to indicate a configuration change of the multicast service.

Optionally, if the configuration change indication is the target indication value, the updating a configuration of the multicast service is indicated; otherwise, not updating a configuration of the multicast service is indicated.

Optionally, the configuration change indication of the multicast service is configured to indicate at least one or more of following:
starting of the multicast service;
configuration modification of the multicast service;
stopping of the multicast service.

Optionally, the configuration information of the multicast service includes at least one of following:
1) a list of ongoing multicast services in a cell to which the terminal belongs;
2) configuration information related to a protocol used by the terminal to receive the multicast service;
3) configuration information related to cell reselection;
4) configuration information related to discontinuous reception of the multicast service.

In FIG. 6, the bus architecture may include any number of interconnected buses and bridges, and specifically, various circuits of one or more processors represented by the processor 610 and a memory represented by the memory 620 are linked together. The bus architecture may also link various other circuits, such as a peripheral device, a voltage regulator, and a power management circuit, which are well known in the art, and therefore are not further described herein. The bus interface provides an interface. The transceiver 600 may be a plurality of elements, that is, includes a transmitter and a transceiver, and provides a unit for communicating with various other apparatuses on a transmission medium. The processor 610 is responsible for managing the bus architecture and general processing, and the memory 620 may store data used by the processor 610 when performing operations.

The processor 610 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

It should be noted that, the above-mentioned network-side device provided in the embodiments of the present application can implement all method steps implemented by the above method embodiments applied to a network-side device, and can achieve the same technical effect, which will not be repeated here for the same parts and beneficial effects as the method embodiments in this embodiment.

In addition, an embodiment of the present application further provides a processor-readable storage medium, on which a computer program is stored, where the program, when executed by a processor, implements the steps of the method of obtaining multicast configuration information or the method of indicating multicast configuration information. In addition, the same technical effect can be achieved, and in order to avoid repetition, details are not described herein again. The readable storage medium may be any usable medium or data storage device accessible by the processor, including but not limited to a magnetic memory (for example, a floppy disk, a hard disk, a magnetic tape, a magneto-optical disk (MO), etc.), an optical memory (for example, a compact disk (CD), Digital Versatile Disk (DVD), Blu-ray Disk (BD), High-Definition Versatile Disk (HVD), etc.), and semiconductor memory (e.g. ROM, Erasable Programmable Read-Only Memory (EPROM), Electrically Erasable Programmable Read Only Memory (EEPROM), Non-volatile memory (NAND Flash), Solid State Disk (SSD), etc.

It should be noted that it should be understood that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a chip of the foregoing apparatus, or may be stored in a memory of the apparatus in a form of program code, and a certain processing element of the apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

The terms "first", "second", and the like in the present application are used to distinguish similar objects, and are not necessarily used to describe a specific order or sequence. It should be understood that the data used in this way can be interchanged under appropriate circumstances, so that the embodiments of the present application described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

A person skilled in the art should understand that the embodiments of the present application may be provided as a method, a system, or a computer program product. Therefore, the present application may take the form of an entirely hardware embodiment, an entirely software embodiment, or an embodiment combining software and hardware aspects. Moreover, the present application may use a form of a computer program product implemented on one or more computer-usable storage media (including but not limited to a disk memory, an optical memory, and the like) including computer-usable program codes.

The present application is described with reference to the flowcharts and/or block diagrams of the method, the device (system), and the computer program product according to the embodiments of the present application. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general purpose computer, special purpose computer, embedded processor, or other programmable data processing apparatus to produce a machine, such that the instructions executed by the processor of the computer or other programmable data processing apparatus generate means for implementing the functions specified in one or more flows and/or block diagrams in the flowchart.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing apparatus, such that a series of operational steps are performed on the computer or other programmable apparatus to produce a computer-implemented process, such that the instructions executing on the computer or other programmable apparatus provide steps for implementing the functions specified in one or more flows of the flowchart and/or one or more blocks of the block diagram.

Evidently those skilled in the art can make various modifications and variations to the disclosure without departing from the spirit and scope of the disclosure. In this way, if these modifications and variations of the present application fall within the scope of the claims of the present application and their equivalent technologies, the present application is also intended to include these modifications and variations.

## Claims

1. A method of obtaining multicast configuration information, comprising:
receiving, by a terminal, downlink control information (DCI), wherein the DCI carries a configuration change indication of a multicast service;
obtaining, by the terminal, configuration information of the multicast service from a scheduled multicast/broadcast service control channel MCCH according to the configuration change indication.

2. The method according to claim 1, wherein that the DCI carries the configuration change indication of the multicast service comprises one of following:
that the DCI comprises first preset bit information, wherein the first preset bit information is configured to indicate a configuration change of the multicast service; or,
that the DCI comprises second preset bit information configured to indicate a configuration change of a broadcast service, wherein the second preset bit information is reused to indicate a configuration change of the multicast service.

3. The method according to claim 1 or 2, wherein the configuration change indication of the multicast service is configured to indicate at least one or more of following:
starting of the multicast service;
configuration modification of the multicast service; or
stopping of the multicast service.

4. The method according to claim 1, wherein the obtaining, by the terminal, the configuration information of the multicast service from the scheduled MCCH according to the configuration change indication comprises at least one of following:
when the configuration change indication of the multicast service carried in the DCI is a configuration change indication of a multicast service interested by the terminal, obtaining, by the terminal from the scheduled MCCH according to the configuration change indication, the configuration information of the multicast service interested by the terminal; or,
when the configuration change indication of the multicast service carried in the DCI is a configuration change indication of a multicast service being received by the terminal, obtaining, by the terminal from the scheduled MCCH according to the configuration change indication, the configuration information of the multicast service being received by the terminal.

5. The method according to claim 1 or 2, wherein if the configuration change indication is a target indication value, then updating a configuration of the multicast service is indicated; otherwise, not updating a configuration of the multicast service is indicated.

6. The method according to claim 1, wherein the configuration information of the multicast service comprises at least one of following:
a list of multicast services ongoing in a cell to which the terminal belongs;
configuration information related to a protocol used by the terminal to receive the multicast service;
configuration information related to cell reselection; or,
configuration information related to discontinuous reception of the multicast service.

7. A method of indicating multicast configuration information, comprising:
determining, by a network side device, a configuration change indication of a multicast service; and
transmitting downlink control information (DCI) to a terminal, wherein the DCI carries the configuration change indication of the multicast service.

8. A terminal, comprising:
a memory, a transceiver, and a processor, wherein, the memory is configured to store a computer program; the processor is configured to read the computer program in the memory; and the transceiver is configured to transmit and receive data under the control of the processor and perform a following operation:
receiving downlink control information DCI, wherein the DCI carries a configuration change indication of a multicast service; and
the processor is configured to read the computer program in the memory and perform a following operation:
obtaining configuration information of the multicast service from a scheduled multicast/broadcast service control channel MCCH according to the configuration change indication.

9. The terminal according to claim 8, wherein that the DCI carries the configuration change indication of the multicast service comprises one of following:
that the DCI comprises first preset bit information, wherein the first preset bit information is configured to indicate a configuration change of the multicast service; or,
that the DCI comprises second preset bit information configured to indicate a configuration change of a broadcast service, wherein the second preset bit information is reused to indicate a configuration change of the multicast service.

10. The terminal according to claim 8 or 9, wherein the configuration change indication of the multicast service is configured to indicate at least one or more of following:
starting of the multicast service;
configuration modification of the multicast service; or
stopping of the multicast service.

11. The terminal according to claim 8, wherein the processor is configured to read the computer program in the memory and perform at least one of following operations:
when the configuration change indication of the multicast service carried in the DCI is a configuration change indication of a multicast service interested by the terminal, obtaining, by the terminal from the scheduled MCCH according to the configuration change indication, the configuration information of the multicast service interested by the terminal; or,
when the configuration change indication of the multicast service carried in the DCI is a configuration change indication of a multicast service being received by the terminal, obtaining, by the terminal from the scheduled MCCH according to the configuration change indication, the configuration information of the multicast service being received by the terminal.

12. The terminal according to claim 8 or 9, wherein if the configuration change indication is a target indication value, then updating a configuration of the multicast service is indicated; otherwise, not updating a configuration of the multicast service is indicated.

13. The terminal according to claim 8, wherein the configuration information of the multicast service comprises at least one of following:
a list of multicast services ongoing in a cell to which the terminal belongs;
configuration information related to a protocol used by the terminal to receive the multicast service; and
configuration information related to cell reselection; or,
configuration information related to discontinuous reception of the multicast service.

14. A network side device, comprising:
a memory, a transceiver, and a processor, wherein the memory is configured to store a computer program; the transceiver is configured to transmit and receive data under the control of the processor; and the processor is configured to read the computer program in the memory and perform following operations:
determining a configuration change indication of a multicast service;
wherein the transceiver is configured to transmit downlink control information DCI to a terminal, wherein the DCI carries the configuration change indication of the multicast service.

15. An apparatus of obtaining multicast configuration information, comprising:
a first receiving unit, configured to receive downlink control information (DCI), wherein the DCI carries a configuration change indication of a multicast service;
a first obtaining unit, configured to obtain configuration information of the multicast service from a scheduled multicast/broadcast service control channel MCCH according to the configuration change indication.

16. An apparatus of indicating multicast configuration information, comprising:
a first determining unit, configured to determine a configuration change indication of a multicast service;
a first transmitting unit, configured to transmit downlink control information DCI to a terminal, wherein the DCI carries the configuration change indication of the multicast service.

17. A processor-readable storage medium, comprising:
a computer program stored thereon, wherein the computer program, when executed by a processor, implements the steps of the method of obtaining multicast configuration information according to any one of claims 1-6, or implements the steps of the method of indicating multicast configuration information according to claim 7.
